# EUROPÄISCHE PATENTSCHRIFT

(11) **EP 0 441 771 B1**
(45) Veröffentlichungstag und Bekanntmachung des Hinweises auf die Patenterteilung: **26.04.1995**
(21) Anmeldenummer: 91890022.6
(22) Anmeldetag: 06.02.1991
(51) Int. Cl.: G01V 8/00

(54) **Verfahren zur Ermittlung der Präsenz von Dampf und/oder Rauch in der Abluft eines Gerätes zum Erhitzen von Materialien sowie Vorrichtungen zur Durchführung dieses Verfahrens**
Process for detecting the presence of damp and/or smoke in the exhaust air from a device for heating materials and apparatus for carrying out this process
Procédé pour la détection de la présence de vapeur ou de fumée dans l'air d'échappement d'un appareil pour le chauffage de matériaux et dispositif pour exécuter ce procédé

(30) Priorität: 06.02.1990 AT 254/90
(43) Veröffentlichungstag der Anmeldung: 14.08.1991
(73) Patentinhaber: Katschnig, Helmut, Dr., A-8750 Judenburg Steiermark (AT)
(72) Erfinder: Gagea, Leonard, Dipl.-Ing., A-8750 Judenburg, Steiermark (AT)
(74) Vertreter: Itze, Peter, Dipl.-Ing.

(56) Entgegenhaltungen:
- EP-A- 0 287 549
- WO-A-87/03091
- DE-A- 2 709 866
- FR-A- 2 181 437
- US-A- 4 420 257
- EP-A1-0 287 549.

## Beschreibung

Die Erfindung bezieht sich auf ein Verfahren zur Ermittlung der Präsenz von Dampf und/oder Rauch in der Abluft eines Mikrowellengerätes zur Desinfektion oder Sterilisation von Gütern, mittels einer Lichtschranke, wobei sowohl die Intensität des hindurchgehenden Lichtes als auch des abgelenkten und/oder reflektierten Lichtes gemessen wird.

Beim Erhitzen von Materialien, insbesondere beim Desinfizieren oder Sterilisieren von Gütern, ist es erforderlich, den Erhitzungsgrad bzw. den Aggregatzustand des Materials zu überwachen, und zwar einerseits, um ein Austrocknen des Materials und damit ein Entzünden desselben zu vermeiden, und anderseits, um den Beginn des eigentlichen Behandlungsvorganges, z.B. des Kochens, eindeutig ermitteln zu können. Dazu sind die unterschiedlichsten Einrichtungen bereits veröffentlicht worden.

Rauchgasmeldeeinrichtungen arbeiten nach verschiedensten Prinzipien, wobei auch solche Einrichtungen vorliegen, bei welchen die Intensitätsminderung einer direkten optischen Strahlung gemessen wird. Derartige Anlagen sind nicht in der Lage, Rauchteilchen von Dampfteilchen zu unterscheiden. Es wird nämlich sowohl hinsichtlich der Rauchteilchen als auch der Dampfteilchen die Intensitätsminderung der vom Empfänger aufgenommenen Strahlung gemessen, wobei seitens des Empfängers nicht differenziert wird, ob die Intensitätsminderung von Rauchteilchen oder Dampfteilchen erfolgt.

Insbesondere bei Geräten, z.B. Mikrowellengeräten, zur Desinfektion und Sterilisation von Gütern ist es notwendig, den Temperaturanstieg des im Bestrahlungsraum befindlichen Gutes zu registrieren, um dadurch eine Erhitzung über den Entzündungspunkt zu verhindern bzw. einen schon entstandenen Schwelbrand zum frühestmöglichen Zeitpunkt zu erkennen. Auch soll der Beginn der Behandlungsdauer eindeutig ermittelbar sein. Direkte Messung der Temperatur des Behandlungsgutes mittels teurer Temperaturmeßsonden ist im Hinblick auf das bei Mikrowellengeräten vorliegende Hochfrequenzfeld sehr teuer und aufwendig. Aus diesem Grund ist die routinemäßige Überwachung sowohl aus hygienischen als auch aus praktischen Gründen nicht möglich. Es läßt sich also der Temperaturanstieg im Behandlungsgut auf einfache Art und Weise nur über indirekte Verfahren messen.

Es wurde daher in EP-A1-0 287 549 bereits vorgeschlagen, im Abluftsystem eines Mikrowellengerätes einen Feuchtesensor einzubauen, der den Feuchtigkeitsgehalt der Abluft mißt und registriert. Dadurch sind zwar unterschiedliche Messungen möglich, nämlich einerseits die Intensitätsminderung einer direkten optischen Strahlung und anderseits eine indirekte Messung der Feuchtigkeit mittels des Feuchtesensors im Abluftsystem. Eine derartige Ausbildung hat jedoch den Nachteil, daß der Feuchtesensor einerseits einem Verschleiß unterliegt und anderseits unter bestimmten Betriebsbedingungen leicht ausfallen kann, wodurch aufwendige Reparaturarbeiten notwendig werden. Auch die auf Infrarotbasis arbeitenden herkömmlichen Rauchgasmeßeinrichtungen im Abluftsystem neigen aufgrund der äußeren Bedingungen ebenfalls leicht zu Störungen, zumal in der Abluft der Materialien auch aggressive Gase oder Dämpfe enthalten sein können, welche dann die Meßeinrichtungen beeinträchtigen oder auch zerstören können. So sind auch auf piezoelektrischer Basis arbeitende Geräte bekannt, bei welchen der Feuchtigkeitsgrad der Abluft mittels piezoelektrischer Elemente gemessen wird. Auch diese Geräte sind unter aggressiven Bedingungen nicht einsetzbar. Grundsätzlich ist auch noch zu bemerken, daß in Mikrowellengeräten nur solche Einrichtungen einsetzbar sind, welche durch ein Hochfrequenzfeld nicht beeinflußbar bzw. zerstörbar sind. Bis auf die herkömmlichen Lichtschranken, die aber die bereits vorstehend genannten Nachteile aufweisen, ist keines der herkömmlichen Geräte im Hochfrequenzfeld stabil.

Aus der DE-A-27 09 866 ist es überdies bereits bekannt, eine Vorrichtung zur Feststellung von Schwebeteilchen so auszubilden, daß sowohl hindurchgehendes Licht als auch abgelenktes Licht erfaßt wird. Bei dieser bekannten Ausbildung ist an der Lichtaustrittsöffnung der Lichtschranke zentral eine Erfassungseinrichtung und eine weitere, diese zentrale Erfassungseinrichtung umgebende weitere Erfassungseinrichtung vorgesehen, wobei die zentrale Erfassungseinrichtung das direkt hindurchgehende Licht und die diese zentrale Einrichtung umgebende Einrichtung das gestreute Licht erfaßt. Dies dient bei dieser bekannten Ausbildung dazu, Rauch oder Schwebeteilchen zu ermitteln, wobei aufgrund einer Differenzschaltung der Einfluß externen Störungslichtes kompensiert werden soll. Mit dieser bekannten Vorrichtung ist es nicht möglich, ein Gemisch von Substanzen differenziert zu erfassen und einer gesonderten Auswertung zuzuführen.

Der Erfindung liegt die Aufgabe zugrunde, ein Verfahren zur verschleißfreien und weitestgehend wartungsfreien Registrierung und Unterscheidung von Dampf und Rauch zu finden, das an Geräten, die mit Hochfrequenz arbeiten, anwendbar ist.

Erfindungsgemäß wird diese Aufgabe dadurch gelöst, daß zur Ermittlung der Dampfpräsenz das durch die Dampfteilchen abgelenkte und/oder reflektierte Licht und zur Ermittlung der Rauchpräsenz die impulsförmige Intensitätsminderung des durch die Abgase hindurchgehenden Lichtes eingesetzt wird. Es werden dadurch zwei charakteristische Eigenheiten von Dampf bzw. Rauch ausgenützt, nämlich hinsichtlich des Dampfes jene Eigenheit, daß er in der Lage ist, das Licht des Lichtschrankens abzulenken bzw. zu reflektieren, und hinsichtlich des Rauches, daß dieser immer impulsförmig auftritt, somit also eine wellenförmige Intensitätsminderung des Lichtes des Lichtschrankens auftritt. Es kann dadurch leicht unterschieden werden, ob die von dem behandelten Gut abstreichende Abluft Dampf oder Rauch enthält.

Bei einer besonders einfachen Ausbildung kann allerdings das abgelenkte und/oder reflektierte Licht gemeinsam mit dem hindurchgehenden Licht erfaßt werden, wobei das gemeinsame Signal geteilt und dann gesondert weiterverarbeitet wird. Es hat sich nämlich gezeigt, daß insbesondere bei geringer Dampfkonzentration aufgrund der mehrfachen Reflexion des eingesandten Lichtes ein Anstieg der Lichtintensität durch den Detektor gemessen wird, wobei bei Vorhandensein von Rauch ein schwallartiges Vermindern der Lichtintensität vorliegt. Es kann somit auch hier die Präsenz von Dampf oder Rauch präzise erfaßt werden. Eine quantitative Messung ist selbstverständlich nicht möglich. Dabei kann das Signal der impulsförmigen Intensitätsminderung differenziert werden, wobei gegebenenfalls vorher eine Integrierung zum 0-Ausgleich eines vorgeschalteten Operationsverstärkers durchgeführt wird. Damit wird ein Ausgangssignal erreicht, das umso größer ist, je steiler der Impuls ist. Dabei kann, wie angeführt, eine Integrierung zum 0-Ausgleich eines vorgeschalteten Operationsverstärkers durchgeführt werden, um die impulsförmigen Signale auszufiltern. Dies deshalb, weil das Ausgangssignal vom Rauchsensor auch durch den Dampf beeinflußt sein kann, welcher bei hoher Konzentration eine langsame Intensitätsminderung mit sich bringen kann. Diese Rückkopplung mit Integrierung ergibt einen automatischen Potentialausgleich, so daß sich der Ausgang des Operationsverstärkers nie sättigen kann. Da der Intensitätsanstieg bei der Dampferfassung langsam und stetig erfolgt, kann das von der abgelenkten und/oder reflektierten Strahlung abgeleitete Signal mit einem durch eine Sample/Hold-Schaltung erzeugten Signal verglichen werden, wodurch eine Bewertung des gemessenen Ist-Wertes gegenüber dem vorigen Wert erreicht wird.

Bevorzugterweise kann die Intensität des Senders der Lichtschranke nur geringfügig oberhalb der Dunkelstromgrenze des Empfängers eingestellt werden, wodurch eine hohe Empfindlichkeit bezüglich der Messung der Dampfpräsenz erreicht wird, hingegen aber noch genügend Ansprechmöglichkeit verbleibt, um die impulsförmige Intensitätsminderung des Lichtes durch das Auftreten von Rauch erfassen zu können. Weiters können die gemessenen Werte der abgelenkten und/oder reflektierten Stahlung mit den gemessenen Werten der intensitätsgeminderten direkten Strahlung in Relation gesetzt werden, wobei der Intensitätsanstieg der erstgenannten Werte zur Bestimmung der Dampfpräsenz genützt wird. Es kann auf diese Art die Menge von Dampf und/oder Rauch getrennt bestimmt werden.

Bei einer Vorrichtung zur Durchführung des erfindungsgemäßen Verfahrens, bei welcher im Abluftbereich eines Mikrowellengerätes zur Desinfektion und Sterilisation von Gütern, eine Strahlenquelle und ein im optischen Strahlengang angeordneter Empfänger vorgesehen ist, ist dem Empfänger eine Signalteileinrichtung nachgeschaltet, wobei der Signalteileinrichtung gegebenenfalls ein Vorverstärker vorgeschaltet ist und wobei der Signalteileinrichtung eine Einrichtung zur Raucherfassung und eine Einrichtung zur Dampferfassung nachgeschaltet ist. Dadurch ist es möglich, mit nur einem Empfänger auszukommen, da das von diesem abgehende Signal geteilt und danach getrennt verarbeitet wird, und zwar je nach den spezifischen Eigenheiten dieses Signals. Dieses Signal kann, wie angegeben, vorverstärkt werden, was eine leichtere Auswertung ermöglicht. Dabei kann die Einrichtung zur Raucherfassung einen der Signalteilung nachgeschalteten Verstärker und ein diesem nachgeschaltetes Differenzierglied aufweisen. Die Integration dient dabei als automatischer Ausgleich für die langsam schwankenden Amplitudenänderungen, die durch etwaige Dampfpräsenz entstehen. Nur ein impulsförmiges Signal kann durch die Kombination von Verstärker und Integrator hindurchkommen. Dabei kann der Verstärker mit einer einen Integrator aufweisenden Rückkopplung versehen sein, dessen Zeitkonstante durch ein RC-Glied festgelegt ist. Dadurch wird eine direkte Information über die Existenz von impulsförmigen Signalen am Ausgang vom Vorverstärker erzielt, welche Signale dann auf das Vorhandensein der Rauchpartikel hinweisen.

Bei der Einrichtung zur Dampferfassung kann, der Signaleinrichtung nachgeschaltet, ein Spannungsverstärker, ein Sample/Hold-Glied und ein mit dem Ausgang des Spannungsverstärkers und dem Sample/Hold-Glied verbundener Komparator vorgesehen sein. Wie bei der vorstehend beschriebenen ersten Ausführungsvariante ist der Intensitätsanstieg bei der Dampfentwicklung langsam und wird durch eine Sample/Hold-Schaltung durch ständigen Vergleich zwischen dem aktuellen und dem vorigen Wert bewertet, wobei den Vergleich der Komparator vornimmt. Schließlich kann dem nicht invertierenden Eingang des Spannungsverstärkers ein Invertierglied vorgeschaltet sein, mit welchem die vom Ausgang des Spannungsverstäkers abgenommene Spannung invertier- und rückkoppelbar ist. Dadurch wird erreicht, daß die Spannung am Sample/Hold-Kondensator immer einen gleichbleibenden Wert hat, wobei eine Änderung der Spannung erst bei einer Änderung der empfangenen Lichtintensität eintritt.

In der Zeichnung sind Ausführungsbeispiele des Erfindungsgegenstandes dargestellt.

Fig. 1 zeigt schematisch die Anordnung einer erfindungsgemäßen Vorrichtung an einem Mikrowellengerät zur Desinfektion von Gütern.

Fig. 2 zeigt schematisch den Strahlengang innerhalb des Abluftkanals sowie die Anordnung der Empfangseinheiten.

Fig. 3 zeigt als Blockschaltbild die im optischen Strahlengang liegende Empfangseinheit.

Fig. 4 stellt analog zu Fig. 3 die außerhalb des optischen Strahlenganges angeordnete Empfangseinheit dar.

Fig. 5 veranschaulicht einen Schaltplan betreffend die Lichtschranke mit zugehörigem Vorverstäker.

Fig. 6 zeigt einen Schaltplan betreffend die Weiterverarbeitung des aus dem Vorverstäker gemäß Fig. 5 erhaltenen Signals.

Fig. 7 zeigt in Form eines Diagramms den Zusammenhang der an den einzelnen Ausgängen des den Dampf ermittelnden Zweiges anfallenden Signale.

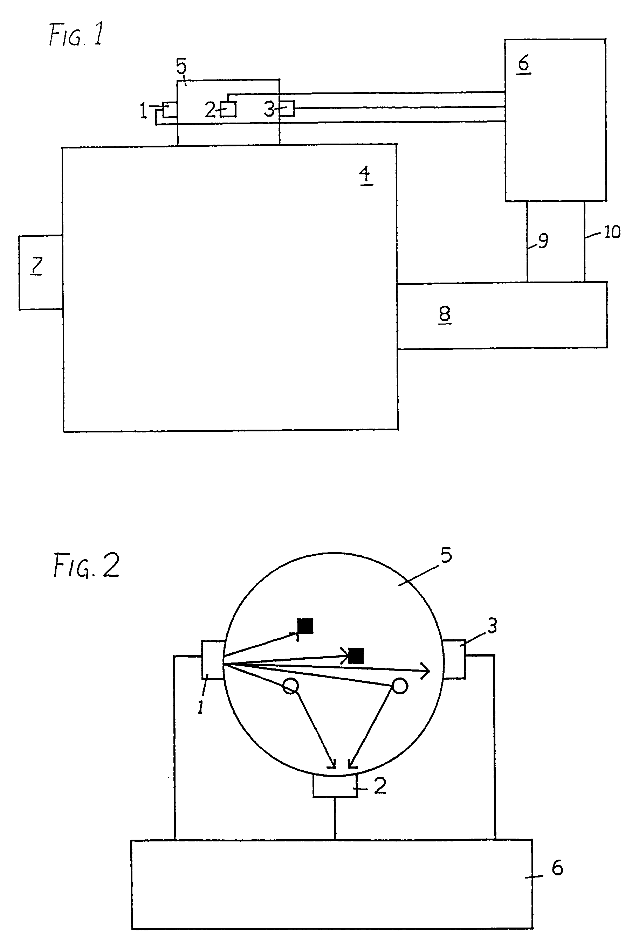

Bei dem Ausführungsbeispiel gemäß Fig. 1 bis 4 sind in einem Abluftkanal 5 eines Behandlungsraumes 4 eines Mikrowellengerätes eine Sendeeinheit 1 und zwei Empfangseinheiten 2 und 3 vorgesehen. Die Empfangseinheit 3 ist dabei im optischen Strahlengang der Sendeeinheit angeordnet. Die Empfangseinheit 2 ist außerhalb des optischen Strahlenganges angeordnet. Die Sendeeinheit und die Empfangseinheiten können in nicht dargestellter Weise auch im Behandlungsraum direkt vorgesehen sein, und zwar ist nur wesentlich, daß sich die genannten Einheiten im Abluftbereich befinden. Die Empfangseinheiten sind über entsprechende Leitungen mit einem Prozessorschaltkreis 6 verbunden. Dieser Prozessorschaltkreis ist über Leitungen 9, 10 mit einer Mikrowellenleistungskontrolleinheit 8 verbunden, welche ihrerseits dann die Leistung des oder der Magnetrone 7 steuert. Die in Fig. 2 als volle Quadrate dargestellten Rauchpartikel absorbieren die von der Sendeeinheit ausgesandte Strahlung und vermindern damit die Intensität des in der Empfangseinheit 3 aufbereiteten Signals. Die in Fig. 2 als blanke Ringe gezeichneten Dampfteilchen beugen oder reflektieren die Strahlung, wobei die gebeugte oder reflektierte Strahlung durch die Empfangseinheit 2 detektiert werden. In der Empfangseinheit 3, welche im optischen Strahlengang der Sendeeinheit 1 gelegen ist, wird das durch die Fotodiode FD1 gelieferte Signal in einem rauscharmen Verstärker aufbereitet, der auf der Fotodiode FD1 0 Volt hält, so daß nur der Fotostrom verstärkt wird und thermische Drift nicht stattfindet. Dem Verstärker A1 ist ein Verstärker A1′ nachgeschaltet, welcher mit einem Integrierglied I1 in Rückkopplung steht. Da das Ausgangssignal vom Rauchsensor auch durch den Dampf beeinflußt sein kann, und zwar dadurch, daß Dampf eine langsame Intensitätsminderung ergibt, ist durch eine Rückkopplung mit der Integrierung, bei welcher die impulsförmigen Signale ausgefiltert werden, ein automatischer Potentialausgleich erzielt, so daß der Ausgang des Verstärkers A1′ sich nie sättigen kann. Das vom Verstärker A1′ gelieferte Signal wird in einem Differenzierglied D1 differenziert. Jedes Rauchpartikel beeinflußt dabei die Lichtintensität in einer impulsförmigen Art, wobei durch das Differenzierglied diese Impulse aus dem Gesamtsignal herausgelöst werden, d.h. je steiler der Impuls ist, desto größer ist das Ausgangssignal. Das von dem Differenzierglied D1 kommende Ausgangssignal wird mit einer Referenzspannung in einem Komparator C1 miteinander verglichen. Das Signal vom Komparator C1 wird über eine Leitung 9 einer Mikroprozessoreinheit 6 zugeführt, in welcher dieses Signal logisch weiterbearbeitet wird.

In der Empfangseinheit 2, welche sich außerhalb des optischen Strahlenganges der Sendeeinheit 1 befindet, wird mittels der Fotodiode FD2 die reflektierte oder abgelenkte Strahlung empfangen. Wenn kein Dampf vorhanden ist, dann nimmt diese Fotodiode nur sehr wenig oder gar keine Strahlung auf, bestenfalls jene Strahlung, die durch die Wandung des Abluftkanales 5 reflektiert wird. Je höher die Dampfmenge ansteigt, desto mehr Licht wird reflektiert und desto höher ist das zum Verstärker A2 gesandte Signal. Das vom Verstärker A2 verstärkte Signal gelangt in einen weiteren Verstärker A2′, dessen Ausgang einerseits mit einem Komparator C2 und anderseits mit dem Eingang einer Sample/Hold-Schaltung verbunden ist. Der Ausgang dieser Sample/Hold-Schaltung ist einerseits mit dem Komparator C2 und anderseits unter Rückkopplung mit dem Verstäker A2′ verbunden. Bei der Dampfmessung ist der Intensitätsanstieg sehr langsam und wird durch die Sample/Hold-Schaltung (Sampleperiode liegt im Sekundenbereich) durch ständigen Vergleich zwischen dem aktuellen und dem vorherigen Wert bewertet. Diese Vergleichsrolle übernimmt der Komparator C2. Durch die angeführte Rückkopplung mit dem Verstärker A2′wird ein automatischer Potentialausgleich erreicht. Das vom Komparator C2 gelieferte Signal wird über die Leitung 10 gleichfalls der Mikroprozessoreinheit 6 zugeführt. Über diese Steuerung erfolgt dann die Regelung der Mikrowellenleistung, und zwar über die Kontrolleinheit 8.

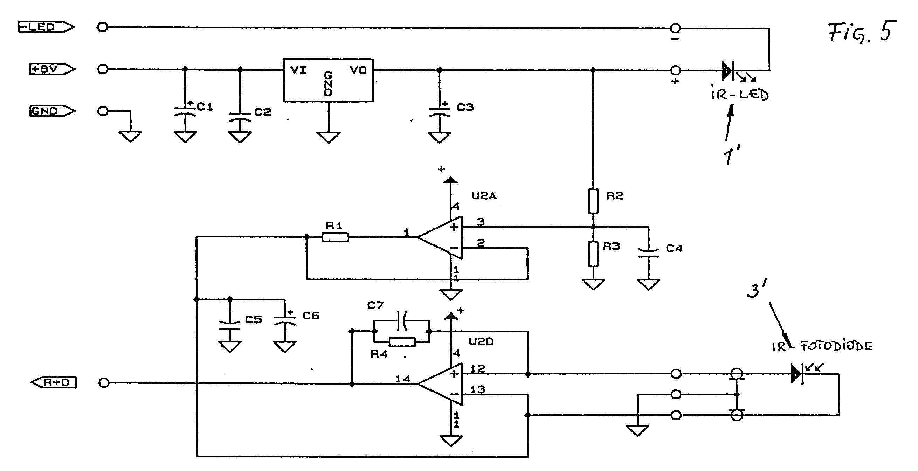

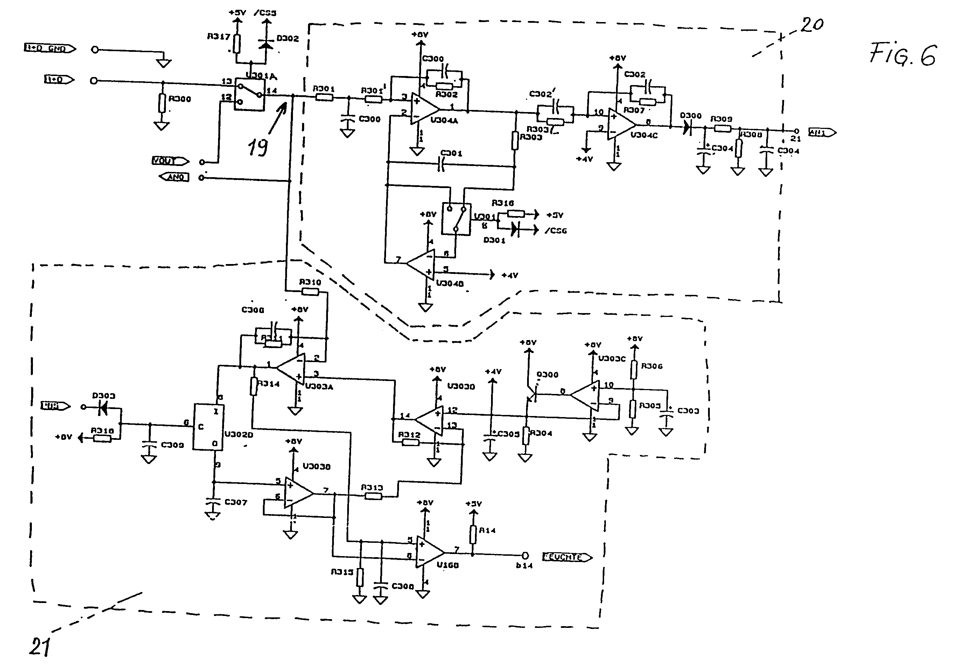

Beim Ausführungsbeispiel gemäß den Fig. 5 und 6 ist ein einfacher Lichtschranken vorgesehen, welcher eine Infrarot-LED 1′ und eine Infrarot-Fotodiode 3′ aufweist. Das Meßprinzip basiert dabei auf einer Lichtintensitätsmessung, wobei der Fotostrom des durch die IR-LED 1′ und die IR-Fotodiode 3′ so geregelt wird, daß der Fotostrom wenig über dem Dunkelstrom der Fotodiode liegt. Die Auswerteeinrichtung besteht dabei aus zwei funktionsgetrennten Modulen, und zwar das Sender-Empfanger-Modul mit eingebautem Vorverstärker und das Analog-und Digital-Mikrokontroller-Modul , mit welchem dann die eigentliche Auswertung der Signale vorgenommen wird.

Im Sender-Empfänger-Modul ist an die IR-Fotodiode 3′ ein Vorverstärker angeschlossen, welcher ein Operationalverstärker (OP) mit CMOS-Technologie ist, der den sehr kleinen Fotostrom verstärkt. Dieser Verstärker ist in Fig. 5 mit U2D bezeichnet. Die Schaltung stellt einen sogenannten Stromspannungswandler dar. Der Arbeitspunkt (Gleichspannung) wird durch einen zweiten Operationalverstärker , der in Fig. 5 mit U2A bezeichnet ist, auf einem vorbestimmten Pegel festgehalten, welcher durch die Widerstände R2 und R3 gegeben ist.

Das Ausgangssignal R+D des Verstärkers U2D ist also eine Spannung, die sich leicht in Abhängigkeit von der Dampf- und/oder Rauchpräsenz im Meßkanal ändern kann. Die Spannungsgröße ist im dampf- und rauchfreien Zustand durch die Lichtintensität der IR-LED 1′ bestimmt.

Das Analog- und Digital-Modul besteht aus einem Teil 21, der die Dampfpräsenz erfaßt, und dem Teil 20, der die Rauchpräsenz umfaßt. Das vom Vorverstärker kommende R+D-Signal wird bei 19 geteilt, wobei der eine Teil dem die Dampfpräsenz ermittelnden Teil 21 und der andere Teil dem die Rauchpräsenz ermittelnden Teil zugeleitet wird. Das Teilsignal, das zur Ermittlung der Dampfpräsenz herangezogen wird, wird an den Eingang eines als Spannungsverstärker ausgebildeten Teiles U303 A zugeleitet. Das Ausgangssignal dieses Spannungsverstärkers wird auf einem Kondensator C307 in einem Zeitintervall von einigen Sekunden gespeichert (Sample/Hold-Schaltung). Die dem Kondensator C307 zugeführte Spannung wird mit U303B gelesen und über das Invertierglied U303D invertiert und rückgekoppelt, und zwar an den nichtinvertierenden Eingang von U303A , so daß die Spannung an C307 immer den vorgegebenen Sample-Wert, vorliegend rund um etwa + 4 V, hat. Die + 4 V kommen von den Bauteilen U303 und Q300. Tritt aufgrund des Auftretens von Dampf eine Änderung der empfangenen Lichtintensität ein, so werden zwischen zwei Sample-Intervallen die Spannungen am Kondensator C 307 und am Ausgang von U303A divergieren. Zur Auswertung dieses Unterschiedes ist ein Komparator U16B vorgesehen. Der Schaltpunkt des Kondensators , also bei welchem Unterschied er das Vorhandensein von Dampf anzeigt, wird durch den Spannungsteiler R314, R315 bestimmt. Die Spannung am Ausgang vom Komparator U16B ist also eine Information über die Dampfpräsenz. Wie schon angeführt, ist die Empfindlichkeit durch das Sample/Hold-Zeitverhältnis und durch den Spannungsteiler R314, R315 bestimmt. Außerdem spielt auch noch die Intensität des IR-Senders eine gewisse Rolle. Eine zu hohe Infrarotstrahlung macht den Empfänger unsensibel auf kleine reflektierte Lichtmengen, d.h. daß der durch das Vorhandensein schon geringer Dampfmengen gegebene Spannungsanstieg nicht gemessen werden kann, wodurch die Einrichtung unsensibel hinsichtlich des Beginnes des Auftretens von Dampf wird. Anderseits bietet eine zu kleine IR-Strahlung keine Reserve für die Raucherfassungseinheit, da dann bereits die geringsten Abschwächungen der Lichtintensität dazu führen, daß keine Änderungen der Lichtintensität wahrgenommen werden können, also daß durch das impulsartige Vorbeiziehen von Rauchschwaden gegebene impulsartige Lichtintensitätsverminderungen nicht wahrgenommen werden können.

Zur Erfassung der impulsartigen Verminderung der Intensität wird das andere Teilsignal, das an dem Signalteiler entsteht, weiter verarbeitet, wobei dieses R+D-Signal zunächst durch einen RC-Filter R301, C300 zur Unterdrückung von Störsignalen geführt wird. Danach wird das entstörte Signal einem Verstärker U304A zugeführt, dessen Verstärkungsfaktor durch die Widerstände R302 und R301′ bestimmt ist. Dieser Operationalverstärker hat als Rückkopplung einen Integrator U304B, dessen Zeitkonstante durch R303 und C301 festgelegt ist. Die Integration auf der negativen Rückkopplung dient als automatischer Ausgleich für die langsam schwankenden Amplitudenänderungen, die durch Dampfpräsenz entstehen können. Es ist damit eine Unterscheidung von impulsartigen Änderungen durch Rauch und langsam schwankenden Änderungen durch Dampf gegeben. Es kann nämlich durch die Kombination U304A und U304B nur ein impulsförmiges Signal durchkommen. Auf diese Kombination folgt eine Differenzierstufe U304C, welche eine Zeitkonstante C 302′, R307 aufweist. Dieser Differenzierstufe ist ein Spitzenwertdetektor mit der D300 -Diode und dem C 304 -Kondensator nachgeschaltet. Die Spannung am Kondensator C304 ist damit eine direkte Information über die Existenz von impulsförmigen Signalen am Ausgang vom Vorverstärker, womit das Vorhandensein von Rauchpartikeln angezeigt ist.

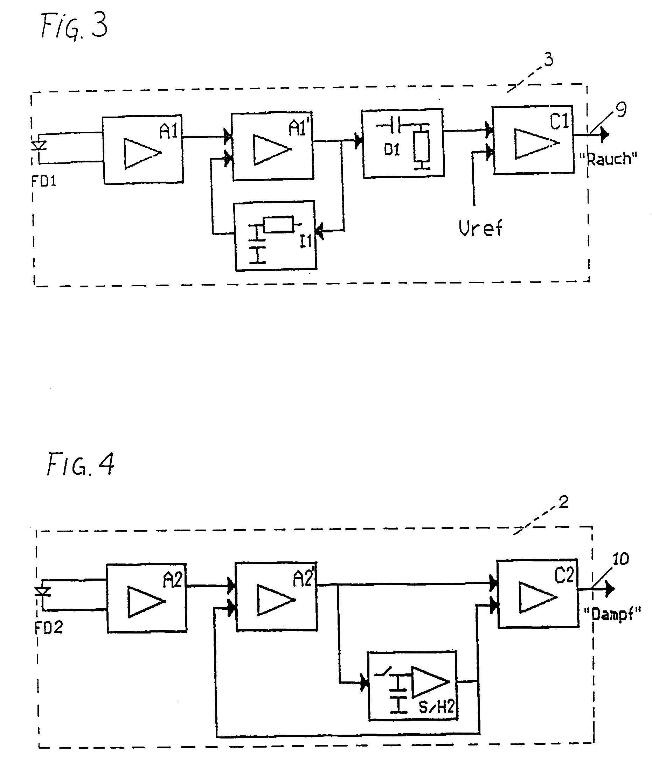

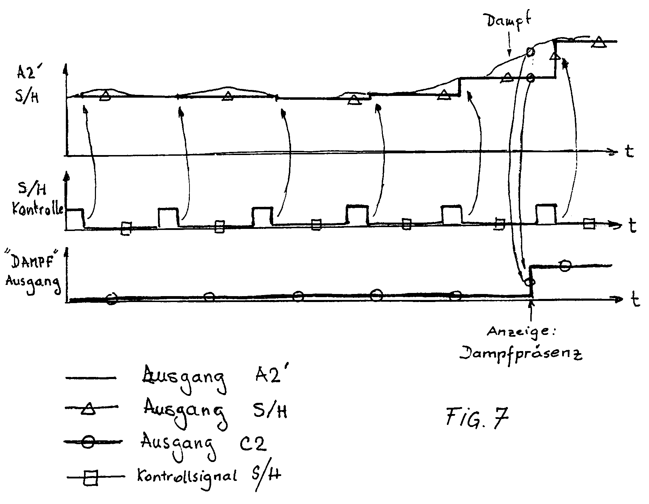

Fig. 7 zeigt in Form von Diagrammen den Ablauf der einzelnen Schaltstufen. Das durchgezogene Signal kommt vom Ausgang des Verstärkers A2′ gemäß Fig. 4 bzw. vom Ausgang des Verstärkers U303A gemäß Fig. 6. Das mit Dreiecken gekennzeichnete Signal ist das Signal, welches vom Sample/Hold-Glied dem Komparator zugeführt wird. Das darunter angezeigte, mit Quadraten gekennzeichnete Signal gibt jeweils die Zeitimpulse des Sample/Hold-Gliedes und damit auch die Vergleichszeitpunkte zwischen dem Sample/Hold-Glied und dem am Ausgang des Verstärkers gemessenen Wert wieder. Wie der Fig. 7 entnehmbar ist, steigt das Sample/Hold-Glied je nach Verlauf des Signals am Ausgang A2′ bzw. U303A, wobei die einzelnen Nachstellstufen des Sample/Hold-Gliedes vom Anstieg der eigentlichen Signaländerung abhängig sind. Nimmt die Schaltstufe im Sample/Hold-Glied einen über einem vorgegebenen Schwellenwert liegenden Wert ein, dann spricht der Komparator dahingehend an, daß er Dampfpräsenz anzeigt. Die am "Dampfausgang" gemessenen Werte sind in Fig. 7 durch Kreise gekennzeichnet, wobei die Schaltstufe, die bei Erreichen einer höheren Differenz zwischen dem letzten Sample/Hold-Wert und dem gemessenen Wert am Ausgang A2′ bzw. U303A als einzelne Stufe angegeben ist, welche dann für das Umschalten der Anzeigeeinrichtung zum Anzeigen der Dampfpräsenz verantwortlich ist.

Um die Schaltungen entsprechend abzustimmen, müßte man Anpassungen an jeder Meßstelle durchführen. Es ist also eine automatische Abstimmung von Vorteil, weshalb die gesamte Analogschaltung durch einen Mikrokontroller überwacht werden kann. Durch die genaue Messung ( Mikrokontroller mit integriertem Analog-Digitalwandler) von Spannungen AN0 und AN1 und durch eine geeignete Software kann eine Selbsteichung stättfinden. Zusätzlich ist ein Selbsttest der Schaltung über die Analogschalter U301A und U301B möglich.

## Patentansprüche

1. Verfahren zur Ermittlung der Präsenz von Dampf und/oder Rauch in der Abluft eines Mikrowellengerätes zur Desinfektion oder Sterilisation von Gütern, mittels einer Lichtschranke, wobei sowohl die Intensität des hindurchgehenden Lichtes als auch des abgelenkten und/oder reflektierten Lichtes gemessen wird, dadurch gekennzeichnet, daß zur Ermittlung der Dampfpräsenz das durch die Dampfteilchen abgelenkte und/oder reflektierte Licht und zur Ermittlung der Rauchpräsenz die impulsförmige Intensitätsminderung des durch die Abgase hindurchgehenden Lichtes eingesetzt wird.

2. Verfahren nach Anspruch 1, dadurch gekennzeichnet, daß das abgelenkte und/oder reflektierte Licht gemeinsam mit dem hindurchgehenden Licht erfaßt wird, wobei das so erhaltene gemeinsame Signal geteilt und dann gesondert weiterverarbeitet wird.

3. Verfahren nach Anspruch 1 oder 2, dadurch gekennzeichnet, daß das Signal der impulsförmigen Intensitätsminderung differenziert wird, wobei gegebenenfalls vorher eine Integrierung zum 0-Ausgleich eines vorgeschalteten Operationsverstärkers durchgeführt wird.

4. Verfahren nach einem der Ansprüche 1 bis 3, dadurch gekennzeichnet, daß das von der abgelenkten und/oder reflektierten Strahlung abgeleitete Signal mit einem durch eine Sample/Hold- Schaltung erzeugten Signal verglichen wird.

5. Verfahren nach einem der Ansprüche 1 bis 4, dadurch gekennzeichnet, daß die Intensität des Senders der Lichtschranke nur geringfügig oberhalb der Dunkelstromgrenze des Empfängers eingestellt wird.

6. Verfahren nach einem der Ansprüche 2 bis 5, dadurch gekennzeichnet, daß die gemessenen Werte der abgelenkten und/oder reflektierten Strahlung mit den gemessenen Werten der impulsförmig intensitätsgeminderten direkten Strahlung in Relation gesetzt werden und daß der Intensitätsanstieg der erstgenannten Werte zur Bestimmung der Dampfpräsenz genützt wird.

7. Vorrichtung zur Durchführung des Verfahrens nach einem der Ansprüche 1 bis 6, bei welcher im Abluftbereich eines Mikrowellengerätes zur Desinfektion und Sterilisation von Gütern, eine Strahlenquelle und ein im optischen Strahlengang angeordneter Empfänger vorhanden sind, dadurch gekennzeichnet, daß dem Empfänger (3′) eine Signalteileinrichtung nachgeschaltet ist, wobei der Signalteileinrichtung gegebenenfalls ein Vorverstärker (U2D) vorgeschaltet ist, und daß der Signalteileinrichtung eine Einrichtung zur Raucherfassung (20) und eine Einrichtung zur Dampferfassung (21) nachgeschaltet sind.

8. Vorrichtung nach Anspruch 7, dadurch gekennzeichnet, daß die Einrichtung zur Raucherfassung (20) einen der Signalteileinrichtung nachgeschalteten Verstärker (U304A) und ein diesen nachgeschaltetes Differenzierglied (U304C) aufweist.

9. Vorrichtung nach Anspruch 8, dadurch gekennzeichnet, daß der Verstärker (U304A) mit einer einen Integrator (U304B) aufweisenden Rückkopplung versehen ist, dessen Zeitkonstante durch ein RC-Glied (R303, C301) festgelegt ist.

10. Vorrichtung nach einem der Ansprüche 7 bis 9, dadurch gekennzeichnet, daß die Einrichtung zur Dampferfassung (21), der Signalteileinrichtung nachgeschaltet, einen Spannungsverstärker (U303A), ein Sample/Hold-Glied (C307) und einen mit dem Ausgang des Spannungsverstärkers (U303A) und dem Sample/Hold-Glied (C307) verbundenen Komparator (U16B) aufweist.

11. Vorrichtung nach Anspruch 10, dadurch gekennzeichnet, daß dem nicht invertierenden Eingang des Spannungsverstärkers (U303A) ein Invertierglied (U303D) vorgeschaltet ist, mit welchem die vom Ausgang des Spannungsverstärkers (U303A) abgenommene Spannung invertier- und rückkoppelbar ist.

## Claims

1. Method of determining the presence of steam and/or smoke in the exhaust air of a microwave device for disinfecting or sterilising articles by means of a light barrier, whereby not only the intensity of the light passing through but also of the deflected and/or reflected light is measured, characterised in that in order to determine the presence of steam the light deflected and/or reflected by the steam particles is used and in order to detect the presence of smoke the pulse-like reduction in intensity of the light passing through the exhaust gases is used.

2. Method as claimed in Claim 1, characterised in that the deflected and/or reflected light is detected together with the light passing through, whereby the common signal thus produced is split and then further processed separately.

3. Method as claimed in Claim 1 or 2, characterised in that the signal of the pulse-like intensity reduction is differentiated, whereby optionally an integration for the zero balance of an operational amplifier connected in front of it is previously carried out.

4. Method as claimed in one of Claims 1 to 3, characterised in that the signal derived from the deflected and/or reflected radiation is compared with a signal produced by a sample/hold circuit.

5. Method as claimed in one of Claims 1 to 4, characterised in that the intensity of the transmitter of the light barrier is set to be only slightly above the dark current threshold of the receiver.

6. Method as claimed in one of Claims 2 to 5, characterised in that the measured values of the deflected and/or reflected radiation are placed in a relationship with the measured values of the direct radiation whose intensity is reduced in pulses and that the increase in intensity of the first mentioned values is used to determine the presence of steam.

7. Apparatus for carrying out the method as claimed in one of Claims 1 to 6 in which provided in the exhaust air region of a microwave device for disinfecting and sterilising articles there are a radiation source and a receiver arranged in the optical beam path, characterised in that connected after the receiver (3′) there is a signal splitting device, a pre-amplifier (U2D) optionally connected before the signal splitting device, and that a device for detecting smoke (20) and a device for detecting steam (21) are connected after the signal splitting device.

8. Apparatus as claimed in Claim 7, characterised in that the device for detecting smoke (20) has an amplifier (U304A) connected after the signal splitting device and a differentiating element (U304C) connected after it.

9. Apparatus as claimed in Claim 8, characterised in that the amplifier (U304A) is provided with a feedback coupling which has an integrator (U304B) and whose time constant is fixed by an RC element (R303, C301).

10. Apparatus as claimed in one of Claims 7 to 9, characterised in that the device for detecting steam (21), connected after the signal splitting device, has a voltage amplifier (U303A), a sample/hold element (C307) and a comparator (U16B) connected to the output of the voltage amplifier (U303A) and the sample/hold element (C307).

11. Apparatus as claimed in Claim 10, characterised in that connected before the non-inverting input of the voltage amplifier (U303A) there is an inverting element (U303D) with which the voltage taken off from the outlet of the voltage amplifier (U303A) may be inverted and fed back.

## Revendications

1. Procédé de détection de la présence de vapeur et/ou de fumée dans l'air d'échappement d'un appareil à micro-ondes de désinfection ou de stérilisation d'objets, au moyen d'une barrière photoélectrique, aussi bien l'intensité de la lumière traversante que celle de la lumière déviée et/ou réfléchie étant mesurée, caractérisé en ce qu'est employée, pour la détection de la présence de vapeur, la lumière déviée et/ou réfléchie par les particules de vapeur et, pour la détection de la présence de fumée, la réduction d'intensité pulsée, de la lumière traversant les gaz d'échappement.

2. Procédé selon la revendication 1, caractérisé en ce que la lumière déviée et/ou réfléchie est détectée en même temps que la lumière traversante, le signal commun ainsi obtenu étant divisé et, ensuite, traité séparément.

3. Procédé selon la revendication 1 ou 2, caractérisé en ce que le signal de la réduction d'intensité pulsée est différencié, une intégration d'équilibrage à 0 d'un amplificateur opérationnel monté en amont étant, le cas échéant, préalablement réalisée.

4. Procédé selon l'une des revendications 1 à 3, caractérisé en ce que le signal dérivé du rayon dévié et/ou réfléchi est comparé avec un signal généré par un circuit échantillonneur-bloqueur.

5. Procédé selon l'une des revendications 1 à 4, caractérisé en ce que l'intensité de l'émetteur de la barrière photoélectrique est réglée à une valeur seulement légèrement supérieure à la limite du courant d'obscurité du récepteur.

6. Procédé selon l'une des revendications 2 à 5, caractérisé en ce que les valeurs mesurées pour le rayonnement dévié et/ou réfléchi sont mises en relation avec les valeurs mesurées pour le rayonnement direct pulsé à intensité réduite, et en ce que l'augmentation d'intensité des premières valeurs est utilisée pour déterminer la présence de vapeur.

7. Dispositif de mise en oeuvre du procédé selon l'une des revendications 1 à 6, dans lequel sont présents, dans la zone d'air d'échappement d'un appareil à micro-ondes de désinfection et de stérilisation d'objets, une source de rayons et un récepteur disposé sur le trajet des rayons optiques, caractérisé en ce qu'est monté, en aval du récepteur (3′), un dispositif de division de signaux, un préamplificateur (U2D) étant, le cas échéant, monté en amont du dispositif de division de signaux, et en ce que sont montés, en aval du dispositif de division de signaux, un dispositif de détection de la fumée (20) et un dispositif de détection de la vapeur (21).

8. Dispositif selon la revendication 7, caractérisé en ce que le dispositif de détection de la fumée (20) comporte un amplificateur (U304A) monté en aval du dispositif de division de signaux et un élément différenciateur (U304C) monté en aval de celui-ci.

9. Dispositif selon la revendication 8, caractérisé en ce que l'amplificateur (U304A) est pourvu d'une rétroaction présentant un intégrateur (U304B), dont la constante de temps est fixée par une combinaison résistance-capacité (R303, C301).

10. Dispositif selon l'une des revendications 7 à 9, caractérisé en ce que le dispositif de détection de la vapeur (21), monté en aval du dispositif de division de signaux, comprend un amplificateur de tension (U303A), un circuit échantillonneur-bloqueur (C307) et un comparateur (U16B) relié à la sortie de l'amplificateur de tension (U303A) et au circuit échantillonneur-bloqueur (C307).

11. Dispositif selon la revendication 10, caractérisé en ce qu'est monté, en amont de l'entrée non inverseuse de l'amplificateur de tension (U303A), un organe inverseur (U303D), à l'aide duquel la tension prélevée à la sortie de l'amplificateur de tension (U303A) est susceptible d'être inversée et réinjectée.
